(19) Europäisches Patentamt

European Patent Office

Office européen des brevets

(11) EP 1 651 526 B1

(12) **EUROPEAN PATENT SPECIFICATION**

(45) Date of publication and mention
of the grant of the patent:
**16.03.2016 Bulletin 2016/11**

(21) Application number: **04763444.9**

(22) Date of filing: **23.07.2004**

(51) Int Cl.:
*B29K 67/00* [(2006.01)]          *B65D 1/02* [(2006.01)]
*B65D 81/26* [(2006.01)]         *B32B 1/02* [(2006.01)]
*B32B 27/34* [(2006.01)]         *B32B 27/36* [(2006.01)]
*B29C 49/08* [(2006.01)]         *B29C 49/22* [(2006.01)]
*C08L 67/02* [(2006.01)]         *C08K 5/098* [(2006.01)]
*C08J 5/18* [(2006.01)]

(86) International application number:
**PCT/EP2004/008267**

(87) International publication number:
**WO 2005/014409 (17.02.2005 Gazette 2005/07)**

(54) **BIAXIALLY STRETCHED AND MULTILAYERED CONTAINER HAVING GAS-BARRIER PROPERTIES AND HIGH TRANSPARENCY**

BIAXIAL GESTRECKTER UND MEHRLAGIGER BEHÄLTER MIT GASSPERREIGENSCHAFTEN UND HOHER TRANSPARENZ

RECIPIENT A EXTENSION BIAXIALE ET A COUCHES MULTIPLES POSSEDANT DES PROPRIETES DE PERMEABILITE AU GAZ ET UNE GRANDE TRANSPARENCE

(84) Designated Contracting States:
**AT BE BG CH CY CZ DE DK EE ES FI FR GB GR HU IE IT LI LU MC NL PL PT RO SE SI SK TR**

(30) Priority: **05.08.2003 EP 03017845**

(43) Date of publication of application:
**03.05.2006 Bulletin 2006/18**

(73) Proprietor: **Amcor Limited**
**Hawthorn, VIC 3122 (AU)**

(72) Inventor: **DEGROOTE, Laurent**
**F-59190 Caestre (FR)**

(74) Representative: **Matkowska, Franck**
**Matkowska & Associés**
**9, rue Jacques Prévert**
**59650 Villeneuve d'Ascq (FR)**

(56) References cited:
**EP-A- 0 301 719          EP-A- 0 380 319**
**EP-A- 0 964 031          EP-A- 1 046 674**
**WO-A-03/029349          US-A- 4 837 115**
**US-A- 5 068 136          US-A- 5 239 016**
**US-A- 5 258 233          US-A- 5 340 884**
**US-B1- 6 444 283**

## Description

### Field of the invention

The present invention relates to biaxially stretched and multilayered containers having high transparency and gas-barrier properties, especially oxygen-barrier properties. The containers of the invention can advantageously be used for packaging oxygen-sensitive products, in particular food and beverage products.

### Prior art

Thermoplastic polyester resins are widely used in the packaging industry for making various hollow and rigid plastic containers (bottles or the like). In particular said containers are obtained by injecting preforms and then by biaxially stretching said preforms in a mould, in particular using the well-known stretch-blow moulding technique. Said process of making biaxially stretched plastic containers can be either a single-stage process or a two-stage process.

More especially, a thermoplastic resin that is widely used is polyethylene terephthalate (PET). This material has a number of valuable properties for packaging, but lacks sufficient gas barrier properties for many applications. In particular because of its oxygen permeability, PET alone is not appropriate for packaging oxygen-sensitive food and beverage products such as beer, fruit juices, some carbonated soft drinks, etc... PET is also permeable to carbon dioxide, which in turn leads to a short shelf life for carbonated products, such as carbonated soft drinks, stored in PET containers.

In order to improve the gas barrier properties of packaging products, in particular oxygen and/or carbon dioxide barrier properties, it is now common to use multilayered packaging products, and in particular multilayered containers, that include at least one barrier layer. For example, in the field of bottle packaging, a typical and common multilayered wall structure for a hollow rigid container is a three-layer wall: two internal and external layers made of PET, and one intermediate gas barrier layer sandwiched between the two PET layers.

A first known type of barrier layer is made of, or comprises, polymers that have excellent gas-barrier properties, in particular to $O_2$ and/or $CO_2$, and is generally referred as "passive barrier layer". Among the polymers used for making passive barrier layers, homo- or copolymers of polyamides are commonly used. Among these polyamides, the so-called "MXD6" or "MXD6 nylon" (specific polyamide material manufactured by Mitsubishi Gas Chemical Company, Japan) is preferably used, i.e. a poly(m-xylyleneadipamide) produced by the polycondensation of a diamine component composed mainly of m-xylylenediamine and a dicarboxylic acid component composed mainly of adipic acid.

US patent 4,501,781 assigned to Yoshino Kogyosho Co, Ltd discloses a multilayered container having for example a three layer structure: an internal layer and an external layer made of PET ; an intermediate passive barrier layer that is made of a blend PET and a xylylene group-containing polyamide (preferably MXD6). The ratio of the xylylene group-containing polyamide in the blend is in the range 5wt% to 50wt%, and preferably in the range 10wt% to 30wt%.

A second known type of barrier layer, which has been more recently developed, is made of, or comprises, polymeric composition that has oxygen-scavenging properties, and is generally referred as "active barrier layer". Generally speaking, an active barrier layer reacts with the oxygen and "captures" the oxygen when the oxygen penetrates into the layer. Such active barrier layer is thus progressively "consumed" in use.

Examples of polymeric compositions used for making active barrier layer are described notably in European patent application EP-A-0 301 719 or in European patent application EP-A-0 507 207. Said polymeric compositions generally comprise and oxidizable polymer and a transition metal catalyst. In EP-A-0 301 719, the preferred oxidizable polymers are polyamides, and especially MXD6. In EP-0 507 207, one preferred oxidizable polymer is polybutadiene. In both cases, preferred transition metal catalysts are transition metal salts, an in particular cobalt stearate. Other known metal salts used for making such composition are for example rhodium, manganese, copper, iron.

With multilayered containers having at least one gas barrier layer comprising a polyamide (e.g. MXD6) and a polyester (e.g. PET), very good results can be achieved in terms of shelf life of the packaged products. More especially when the barrier layer comprises a polyamide (e.g. MXD6), polyester (e.g. PET), and a catalyst such as a cobalt salt, the multilayered container can be used for storing oxygen-sensitive products, such as beer, fruit juice or the like. The shelf life of the packaged product widely depends of the amount of polyamide in the container and of the thickness of the barrier layer.

US patent 5,281, 260 assigned to American National Can Company also teaches that the gas barrier property of polyester is enhanced by blending the polyester with xylylene group-containing polyamide and a transition metal catalyst. Preferred embodiments include blends of PET/MXD6/Cobalt. US patent 5,281, 260 further teaches that a high orientation of said blend would also improve the barrier properties. The explanation given is that the high orientation of the blend would increase the surface areas and interface between PET and MXD6 so that there are a greater number of sites at which a reaction or absorption of oxygen takes place.

In return, one major drawback of the use of a blend : polyamide/polyester, and in particular of blend : xylylene group-containing polyamide (such as MXD6)/ PET, for making a barrier layer in a multilayered and stretch blow moulded container, is the formation of haze in the barrier layer due to the high biaxial orientation of the layer.

Said problem of haze formation occurs and is very often eye-visible for layer polyamide/polyester having a "high" amount of polyamide, that is to say for polyamide amount of at least 3wt% in the layer, the worst case in terms of haze formation being a 50/50 blend in the layer.

In case of a gas barrier layer of a multilayered container, the polyamide having the barrier properties is located only in the barrier layer of the multilayered wall of the container, and the concentration of polyamide in the barrier layer is "high" (in comparison to a blend used for making a monolayer container) and is always greater than 3wt% in order to achieve the gas barrier properties, which in turns lead to problems of haze formation.

Said haze formation in the container wall is obviously detrimental for all the applications where it is important to have a transparent container, - i.e. a container whose wall has no eye-visible whitening or haze, in order to have a better appearance of the packaged product.

Said technical problem of haze formation of a highly oriented blend polyamide/polyester has been for example identified in US patent 6,239,210 assigned to Pechiney Emballage Flexible Europe. In particular, US patent 6,239,210 teaches that the loss of clarity is due to a change in the refractive index of the materials. The technical solution recommended in US patent 6,239, 210 in order to reduce haze is to limit the degree of orientation of the blend. More especially, in the field of making rigid multilayered containers, US patent 6,239,210 teaches to select the extrusion blow moulding process in order to achieve the required low degree of orientation, instead of the injection stretch blow moulding process that implies higher degrees of polymer orientation, and that leads to haze formation in the blend polyamide/PET.

## Objectives of the invention

A general and main objective of the invention is to obtain a biaxially stretched container, especially an injection stretch blow moulded container, having a multilayered wall structure with at least one gas barrier layer and exhibiting low haze.

A further objective of the invention is to obtain a biaxially stretched container having a multilayered wall structure with at least one gas barrier layer comprising a polyamide, said multilayered container having similar or higher gas barrier properties but exhibiting a lower haze than the same multilayered container with at least one gas barrier layer made from a blend polyamide/PET.

## Summary of the invention

These objectives are achieved by the multilayered preform or multilayered container of claim 1.

The invention consists essentially in the use, - for making the gas barrier layer of the multilayered preform or container-, of a polyamide in combination with a PET modified copolymer having a low crystallization speed, namely a x%PETI copolymer and/or y%PETG copolymer, wherein x and y are at least equal to 5.

The term "x%PETI" used herein means a copolymer resin of polyethylene terephthalate and polyethylene isophthalate, having an isophthalic purified acid (IPA) content of x mole %. An isophthalic purified acid content (IPA) of x mole % means that during the preparation process of the copolymer by polymerisation of a glycol or glycol ether (for example ethylene glycol) with both terephthalic acid and isophthalic acid, x mole percent of isophthalic acid reacted with ethylene glycol.

The term "y%PETG" used herein means a copolymer resin of polyethylene terephthalate and 1,4 cyclohexane dimethanol (CHDM) having a CHDM content of y mole %. A 1,4 cyclohexane dimethanol (CHDM) content of y mole % means that during the preparation process of the copolymer by polymerisation of a glycol or glycol ether (for example ethylene glycol) with terephthalic acid, y mole percent of 1,4 cyclohexane dimethanol (CHDM) reacted with terephthalic acid.

In a preferred embodiment, x and y are at least equal to 20, and preferably at least equal to 30.

Polyamides that are suitable for making the gas barrier layer of the preform or container of the invention can be any homo- or copolymer of polyamide (aromatic or aliphatic polyamide). Particularly interesting polyamides are those containing groups of the formula -arylene-$CH_2$-NH-CO-, conveniently in -NH-$CH_2$-arylene-$CH_2$-NH-CO-alkylene-CO- units. Especially suitable arylene groups are phenylene groups, particularly $\underline{m}$-phenylene groups, which may be alkyl-substituted and/or condensed with other unsubstituted or alkyl-substituted aromatic rings. Alkylene and alkyl groups may conveniently have from 1 to 10 carbon atoms, and may be straight-chain or branched. Especially suitable alkylene groups are $\underline{n}$-butylene groups. More particularly, among the polyamides that can be used for making the gas barrier of the preform or container of the invention, the so-called MXD6 is the most suitable owing to the high gas barrier properties of this polyamide.

Fully aliphatic polyamides can also be used, especially those comprising -$CO(CH_2)_n CONH(CH_2)_m NH$- or-$(CH_2)_p CONH$- units (n, m, and p being integers usually equal to 4, 5 or 6).

Preferably, the polyamides used for making the gas barrier of the preform or container of the invention are high molecular weight polyamides, and in particular having a number average molecular weight greater than 10,000, and more especially greater than 15,000.

Within the scope of the invention, the gas-barrier layer is made from a blend comprising a polyamide and a x%PETI copolymer and/or y%PETG copolymer, wherein x and y are at least equal to 5.

More particularly, in one variant of the invention, the polyester used in the barrier layer is essentially made of an x%PETI copolymer and y%PETG copolymer, wherein x and y are at least equal to 5. In another variant, the polyester can be a blend comprising a homo- or copolymer of PET and a y%PETG copolymer, wherein y is at least equal to 5.

The term "PET" used herein means, in addition to the specific polyester "polyethylene terephthalate", any similar polyesters derived from the reaction of terephthalic acid with a glycol or glycol ether, or from the reaction of a non-polymeric terephthalic acid diester, for example, dimethylterephthalate and similar diesters, with a glycol or glycol ether. Examples of such glycols and glycol ethers include cyclohexane dimethanol and diethers thereof, ethylene glycol and diethers thereof, diethylene glycol and diethers thereof, propylene glycol and diethers thereof, 1,3-propanediol and diethers thereof, butadeniols and diethers thereof, pentanediols and diethers thereof.

## Short description of the drawings

Other characteristics and advantages of the invention will appear more clearly on reading the following detailed description of several preferred embodiments of the invention, which description is made by way of non-exhaustive and non-limiting example, and with reference to the accompanying drawings, in which:

- Figure 1 is schematic drawing of a multilayer preform having a three-layer wall, and
- Figure 2 is a schematic drawing of a multilayered bottle obtained by stretch blow moulding the preform of figure 1
- Figure 3 shows the refractive index versus planar ratio for MXD6 and PET measured on cast films and stretched films.

## Detailed description of the invention

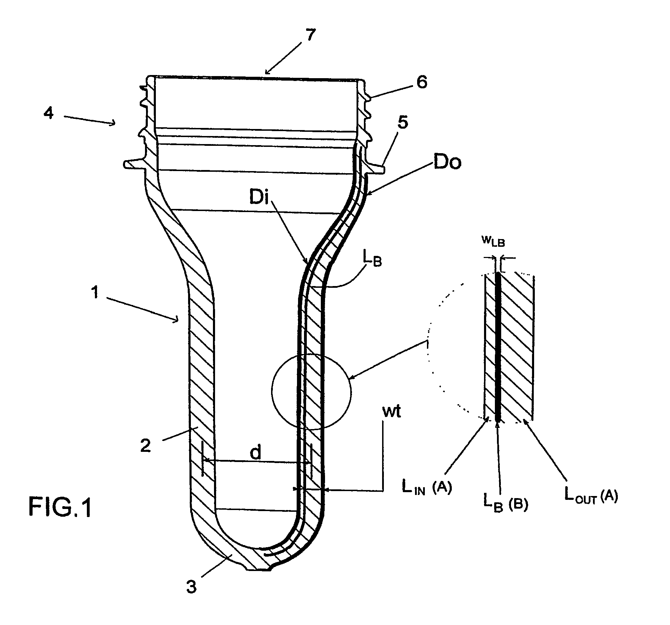

### MULTILAYERED PREFORM (Figure 1)

Figure 1 show a non-limiting example of a multilayered preform 1 having the well-known general following structure:

- a main tubular body 2 closed by a substantially hemispherical bottom end 3;
- a neck portion 4 including a collar 5, a thread 6, and an opened end-mouth 7.

As depicted in the enhanced view of figure 1, the tubular body 2 (and also the bottom end 3) is made of a three-layer wall: an outside layer $L_{OUT}$ and an internal layer $L_{IN}$ made from a first low-cost thermoplastic material A, and a thin intermediate layer $L_B$, that is sandwiched between the two layers $L_{OUT}$ and $L_{IN}$, and that is made from a second thermoplastic material B having gas barrier properties.

The neck portion 4 of the preform is of the mono-layer type and is for example made from the first thermoplastic material A. Said preform 1 is made in a standard way by co-injection (simultaneous and/or sequential injection) of the two thermoplastic materials A and B in an appropriate mould.

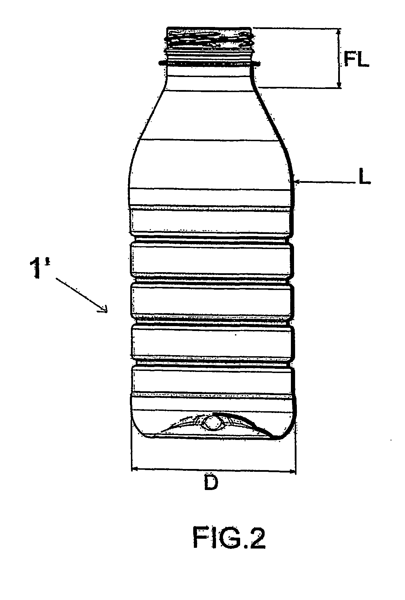

### MULTILAYERED STRETCH BLOW MOULDED BOTTLE (Figure 2)

The preform 1 is an intermediary product which in a further step is being transformed into a final hollow and rigid container (as for example the bottle 1' depicted in figure 2), by biaxially (radially and longitudinally) stretching in a mould the tubular body 2 and the bottom end 3 of the preform, by way for example of the well-known stretch-blow moulding technique. During this process, the neck portion 4 of the preform 1 is not stretched and remains unchanged.

The injection moulding step and the stretch-blow moulding step can be performed in two separate stages with a reheating of the preform, or can be performed in line as a one stage process.

The invention will now be better understood in the light of the following examples N°1 to 15 of a three-layer preform and a three-layer stretch blow moulded bottle of the invention. All the following examples relate to a three-layer product (preform or bottle), but it has to be emphasized that the invention can be more generally applied for making any multilayered preform or biaxially stretched container having at least one gas barrier layer.

## Examples N°1-15

In each example N°1 to 15, three-layered preforms like the one depicted on figure 1 are made from two material A and B, whereby examples N°1 and N°2 are outside the scope of the claims.

**Material A**

In all the examples, material A (outside and inside layers $L_{IN}$ and $L_{OUT}$ of the preform) is a blend of homopolymer of PET (Standard grade: less than 3wt % of Isophthalic purified acid) commercialized under reference 9921W by VORIDIAN and having an Intrinsic viscosity of 0.82 +/- 0.02.

Material B

In all the examples, material B (gas barrier layer $L_B$) is a dry blend made from 80wt% of a component B1, 19.62wt% of MXD6 and 0.38wt% of Cobalt Stearate. Component B1 is different for each example and is specified in table 1.

Table 1 : Material B -BLEND

| Example N°# | MATERIAL B - BLEND | | MXD6[1] | Cobalt[2] |
|---|---|---|---|---|
| | Component B1 | | | |
| 1 | 40%PETI[3] - 80wt% | | 19.62wt% | 0.38wt% |
| 2 | 8%PETI[4] - 80wt% | | 19.62wt% | 0.38wt% |
| 3 | 8%PETI[4] 70wt% | 32%PETG[5] 10wt% | 19.62wt% | 0.38wt% |
| 4 | 8%PETI[4] 60wt% | 32%PETG[5] 20wt% | 19.62wt% | 0.38wt% |
| 5 | 8%PETI[4] 50wt% | 32%PETG[5] 30wt% | 19.62wt% | 0.38wt% |
| 6 | 8%PETI[4] 40wt% | 32%PETG[5] 40wt% | 19.62wt% | 0.38wt% |
| 7 | 8%PETI[4] 30wt% | 32%PETG[5] 50wt% | 19.62wt% | 0.38wt% |
| 8 | 8%PETI[4] 20wt% | 32%PETG[5] 60wt% | 19.62wt% | 0.38wt% |
| 9 | 6%PETG[6] - 80wt% | | 19,62wt% | 0.38wt% |
| 10 | 6%PETG[b] 70wt% | 32%PETG[5] 10wt% | 19.62wt% | 0.38wt% |
| 11 | 6%PETG[6] 60wt% | 32%PETG[5] 20wt% | 19.62wt% | 0.38wt% |
| 12 | 6%PETG[6] 50wt% | 32%PETG[5] 30wt% | 19.62wt% | 0.38wt% |
| 13 | 6%PETG[6] 50wt% | 32%PETG[5] 40wt% | 19.62wt% | 0.38wt% |
| 14 | 6%PETG[6] 30wt% | 32%PETG[5] 50wt% | 19.62wt% | 0.38wt% |
| 15 | 6%PETG[6] 20wt% | 32%PETG[5] 60wt% | 19.62wt% | 0.38wt% |

(1) MXD6 grade 6007 (from MITSUBISHI GAS CHEMICAL)/ Pellets
(2) Cobalt Stearate commercialized under reference STEACO 9.5 by SHEPHERD CHEMICAL COMPANY / Powder
(3) MITSUI B Resin B-050 commercialized by MITSUI CHEMICALS and having an intrinsic viscosity of 0.85 / pellets
(4) resin commercialised by DUPONT SABANCI POLYESTER EUROPE under reference OPTRA H, and having an intrinsic viscosity 0.84 / pellets
(5) resin commercialized by SK CHEMICALS under reference Skygreen S 2008 and having an intrinsic viscosity of 0.8 /pellets
(6) resin commercialized by VORIDIAN under reference PJ003 and having an intrinsic viscosity of 0.83 / pellets

Preparation of the material A and B

At first, PET pellets (material A) are dried at 160°C during four hours. MXD6 pellets are separately dried at 80°C during four hours and pellets of component B1 are dried at moderate temperature (around 40°C above Tg)

A dried blend (material B) is prepared by mechanically blending in a tumbler dried pellets of component B1 (80wt%) and MXD6 (19.62wt%), and by adding cobalt stearate (0.38wt%) in powder form, in order to coat the pellets with the cobalt stearate. The blend is kept at 85°C under dry air before co-injection.

Injection step

The said blend (material B) is co-injected in a standard way in a mould with material A, in order to make a three-layer preform 1.

The co-injection step for making the preform is the same for each examples N°1 to 15.

The co-injection step is performed on a Battenfeld 1000 co-injection machine. The co-injection machine is equipped with :

- a main screw (for injecting material A) with a diameter of 35mm and a UD ratio of 25/1,
- a second screw (for injecting the gas barrier material B) with a diameter of 25mm and UD ratio of 25/1.

The Battenfeld machine has 3 heating bands that form three heating zones. Water is used as coolant with an inlet temperature < 10°C and an outlet temperature < 15°C.

The weight and dimensions of the preforms are the same for all the examples and are summarized in table 2.

Table 2 : Example of weight and dimensions:

| | |
|---|---|
| Weight (g) | **26** |
| wt (mm) | **3.92** |
| $W_{LB}$ (mm) | **0.43** |
| D (mm) | **18.14** |
| l (mm) | **75.36** |

Referring to figure 1, the dimensions of the preform mentioned in table 2 are defined as follows:

- wt is the preform multilayered wall thickness ;
- $w_{LB}$ is the average thickness of the gas barrier layer in the preform ;
- d is the mean diameter of the preform
- l is the developed length of the preform and is determined by formula :

$$l = \frac{Di + Do}{2}$$

wherein Di is the length of internal line (bold outlined on figure 1), and Do is the length of external line (bold outlined on figure 1).

Blow molding step

The preforms are biaxially stretched and blow-moulded in a standard way (blow molding step). The blow moulding step is the same for each example.

In particular, the preforms are biaxially stretched and blow-moulded on Sidel stretch blow moulding machine (SB O/2®), so as to obtain the three-layer bottle 1' of figure 1 having a fill volume of 0.5l. On figure 2, the straight line referred "FL" defines the upper limit of the fill volume of the bottle.

The bottle dimensions are the same for each example. As a non-limiting example, the main dimensions of the bottles are summarized in table 3.

Table 3 : Bottle dimensions

| | Bottle |
|---|---|
| D (mm) | **70mm** |
| L (mm) | **208,5** |
| WT (mm) | **0.39** |
| $W_{LB}$ (mm) | **0.04** |

(continued)

|  | Bottle |
|---|---|
| $SR_H$ | **3.86** |
| $SR_L$ | **2.77** |
| SR | **10.69** |

In table 3 :

- dimension (D) is the maximum overall diameter of the bottle ;
- Dimension (L) is the developed length of the bottle surface from the underside of the neck ring and up to the bottle bottom end (bold outlined).
- Dimension (WT) is the average wall thickness of the bottle;
- Dimension ($W_{LB}$) is the average thickness of the gas barrier layer ($L_B$) in the bottle;
- $SR_H$ is the hoop stretch ratio and is defined by:

$$SR_H = \frac{D}{d}$$

- $SR_L$ is the longitudinal stretch ratio and is defined by:

$$SR_L = \frac{L}{l}$$

- SR is the planar stretch ratio and is defined by: $SR = SR_L \times SR_H$

## COMPARATIVE BOTTLE TESTING

Several tests were performed on the bottles of examples N°1 to N°15 in order to measure the following parameters: haze, scavenging performances, mechanical performances (top load).

By way of comparison the same test were performed on test bottles according to examples 16 and 17 below.

Example N°16 (prior art):

Injection-stretch blow moulded monolayer PET bottle having the same dimensions (except that the bottle is of the monolayer type) and weight than the bottles of examples N°1 to 15. The PET resin is the same than the one used for material A in examples N°1 to 15. The test bottles of examples N°16 exhibits very good clarity but very poor scavenging properties.

Example N°17 :

Three-layered bottles having the same weight and dimensions than the bottles of examples N°1 to 15. The bottles are obtained in an standard way by co-injecting the same material A (PET resin used in examples N° 1 to 15) in order to make the outside and inside layers $L_{IN}$ and $L_{OUT}$ of the preform with material B' (internal gas barrier layer).

Material B' is a dry blend of:

- 80wt% of homopolymer of PET (Standard grade: less than 3wt % of Isophthalic purified acid) commercialized under reference 9921W by VORIDIAN and having an Intrinsic viscosity of 0.82 +/- 0.02 [pellets];
- 19.62 wt% of MXD6 grade 6007 (from MITSUBISHI GAS CHEMICAL) [pellets] and,
- 0.38wt% of cobalt stearate commercialized under reference STEACO 9.5 from SHEPHERD CHEMICAL COMPANY [powder].

The test bottles of example N°17 are exhibiting high scavenging properties but in return are exhibiting eye-visible haze and do not achieve the objective of the invention in terms of haze level.

## Test methods

### Haze measurement

The haze is measured with a spectrophotometer (Minolta® CM -37000d) in the straight wall portion of the bottle, and by using the standard method ASTMD1003

### Scavenging test

The objective of the $O_2$ scavenging test is to check if the active layer in the wall of the container is effectively preventing the ingress of $O_2$.

Bottles are filled brimfull with deaerated water - less than 150 ppb of $O_2$ - and are closed with an induction sealed aluminium foil. Then they are stored at constant temperature of 22 °c +/- 0.5 °C. The $O_2$ dissolved in water is measured every 2 weeks using the orbisphere method. The general principle of the orbisphere system is based on the law of equilibrium between the gas present in the liquid and the gas phase. The equipment used is an oxygen sensor serie 311 XX with a membrane model 2958 A. The orbisphere microprocessor for 02 measurement is the 2640 model.

Bottles are first shaken during 3 minutes then the liner is pierced by the needle of the orbisphere piercer; the water to analyse is pushed by an inert gas - nitrogen- towards the sensor oxygen containing the membrane. $O_2$ concentration is then automatically calculated and displayed on the screen.

Bi-monthly measurements allow to follow the evolution of 02 dissolved inside the different containers produced.

### Top load Test

The objective of the test is to determine the vertical load that a bottle can withstand before deformation.

The test apparatus is a TOPLOAD tester INSTRON 1011.

The empty bottle under test is centered and positioned upright in the tester.

The load plate is moved downward with a speed of 50mm/min into contact with the bottle finish and the pressure is progressively increased until the bottle starts to be deformed. At the first deformation of the bottle (= peak 1) the load plate returns to its initial position. The top load value is obtained by reading the load value (kg) on the TOPLOAD tester.

## Test Results

### Top load

All the bottles of examples N°1 to 17 are exhibiting very good and comparable mechanical properties, the top load in each case being between 31 Kg and 34 Kg.

### Scavenging

All the bottles of examples N°1 to N°15 are exhibiting high scavenging properties that are comparable to the scavenging properties of bottles of example 17. In particular, after six months, the bottles of examples N°1 to 15 were still scavenging $O_2$, i.e. the residual quantity of oxygen dissolved in the water stored during 6 months in these bottles was lower than the starting level of $O_2$ dissolved just after filling (less than 120 ppb). In comparison, the bottles of example N° 16 do not exhibit scavenging properties. After two months only, the dissolved oxygen in water was 5.7 ppm.

### Haze level

The results of the tests for haze level are summarized in table 4 below.

**Table 4 : Experimental results - Haze level**

| Ex. N°# | Gas barrier material (B) | wt% | Haze % |
|---|---|---|---|
| 1 | 40%PETI/MXD6+Co | 80/20 | 2.47 |
| 2 | 8%PETI / MXD6+Co | 80/20 | 5.32 |

(continued)

| Ex. N°# | Gas barrier material (B) | wt% | Haze % |
|---|---|---|---|
| 3 | 8%PETI / 32%PETG/MXD6+Co | 70/10/20 | 3.74 |
| 4 | 8%PETI / 32%PETG/MXD6+Co | 60/20/20 | 3.56 |
| 5 | 8%PETI / 32%PETG/MXD6+Co | 50/30/20 | 2.35 |
| 6 | 8%PETI / 32%PETG/MXD6+Co | 40/40/20 | 2.39 |
| 7 | 8%PETI / 32%PETG/MXD6+Co | 30/50/20 | 1.51 |
| 8 | 8%PETI / 32%PETG/MXD6+Co | 20/60/20 | 1.81 |
| 9 | 6%PETG/ MXD6+Co | 80/20 | 5.9 |
| 10 | 6%PETG /32%PETG/MXD6+Co | 70/10/20 | 4.62 |
| 11 | 6%PETG /32%PETG/MXD6+Co | 60/20/20 | 4.37 |
| 12 | 6%PETG /32%PETG/MXD6+Co | 50/30/20 | 2.93 |
| 13 | 6%PETG /32%PETG/MXD6+Co | 40/40/20 | 2.66 |
| 14 | 6%PETG /32%PETG/MXD6+Co | 30/50/20 | 1.96 |
| 15 | 6%PETG /32%PETG/MXD6+Co | 20/60/20 | 1.84 |
| *16* | *PET(Monolayer) - comparative example* | *100* | *2.2* |
| *17* | *PET/MXD6 +Co - comparative example* | *80/20* | *7.12* |

The examples N°1 to N°17 in table 4 corresponds to examples N°1 to 17 in table 1. In table 4 the weight percentage of MXD6 is added to the weight percentage of Cobalt Stearate (Co). For instance, example 1 in table 4 has to be read as follows : the blend is made of 40%PETI at 80wt%, and a mixture MXD6 and Cobalt stearate at 20wt% [which corresponds to example 1 in table 1 wherein the specific amounts of MXD6 and Cobalt stearate are detailed (namely 19.62 wt% of MXD6 + 0.38wt% of Cobalt Stearate = 20wt%)]. For instance, example 3 in table 4 has to be read as follows: the blend is made of 8%PETI at 70wt%, 32%PETG at 10wt% and a mixture MXD6 and Cobalt stearate at 20wt% [which corresponds to example 3 in table 1 wherein the specific amounts of MXD6 and Cobalt stearate are detailed (namely 19.62 wt% of MXD6 + 0.38wt% of Cobalt Stearate = 20wt%)].

The above results in table 4 demonstrate that the haze level is improved in examples N°1 to 15, compared to the haze level for bottles of example N°17. In addition, the haze level decreases when the mole percentage (x) of isophthalic acid for PETI copolyester or the mole percentage (y) of CHDM for the PETG copolyester is increased, and/or when the amount (in wt%) of y%PETG and/or x%PETI in the barrier layer is increased.

In particular, referring to examples N°5, N°6, N°7, N°8, N°12,N°13, N°14, N°15, very low haze level are achieved (comparable to a PET monolayer bottle of example N°16 and even with lower haze level in case of examples N°7, N°8, N°14 and N°15).

In addition, the bottles of example N°1 to N°15 exhibit higher adhesion properties for the layers (compared to bottles of example N°17) and in particular it is very difficult to delaminate by hand the layers of the bottles.

More particularly, better results - in particular in terms of haze level - are obtained when the preform or container of the invention has the following characteristics:

- the polyester in the barrier layer comprises a x%PETI copolymer and a y%PETG copolymer, with x and y being at least equal to 5 ; more preferably, in that case, x is at least equal to 5, and preferably at least equal to 8 and y is at least equal to 20 and preferably at least equal to 30 ; preferably, the amount of y%PETG in the barrier layer is greater than the amount of x%PETI ;

and/or up

- the gas-barrier layer ($L_B$) comprises 0 to 80wt% of x%PETI and up to 80wt% of y%PETG, the amount of x%PETI and y%PETG being at least equal to 80wt%;

and/or

- the amount of x%PETI copolymer and/or y%PETG copolymer in the barrier layer ($L_B$) is at least 10wt%, preferably at least 50wt%, and more preferably at least 80wt%;

and/or

- x or y is at least equal to 20, and preferably at least equal to 30.

Regarding the gas barrier properties, the amount of polyamide (MXD6 or the like) in the barrier layer $L_B$ is preferably at least 3wt% (of the total weight of the barrier layer), and more preferably at least 10wt%.

The invention is especially (but not only) suitable for making injection stretch blow moulded bottle having high stretch ratios, i.e. having a longitudinal stretch ratio ($SR_L$) greater than 2.5, and/or a hoop stretch ratio ($SR_H$) greater than 3, and/or a planar stretch ratio (SR) greater than 10.

The haze improvement obtained when practising the invention can be "a posteriori" explained as follows.

Haze in the bottle of example N°17 would be generated mainly during the biaxial stretching of the preform, due to the difference between the refractive index of oriented PET and the refractive index of oriented MXD6.

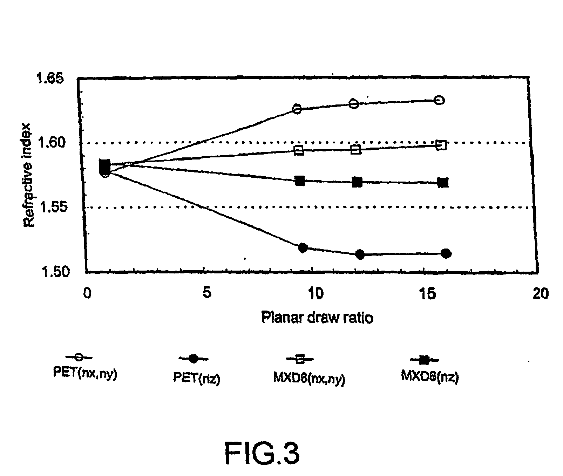

Figure 3 shows the refractive index versus planar ratio for cast films and stretched films made of MXD6 and for cast films and stretched films made of PET. It can be derived from figure 3 that the refractive index of non-oriented PET is substantially equal to the refractive index of the non-oriented MXD6, but that the refractive index of PET is increasing quickly when PET is being stretched, while the refractive index of MXD6 remains substantially constant. It can thus be derived from these graphs of figure 3 that in the preform, the refractive indices of MXD6 and PET are substantially the same, but once the preform is being stretched the refractive index of PET becomes far more important than the refractive index of MXD6 in the middle gas barrier layer of the bottle. Said important difference between the refractive indices of the two materials in the barrier layer would explain the formation of haze in the bottle, when the preform is being stretched.

In examples N°1 to N°15, the use of a x%PETI and/or y%PETG copolyester (x,y >5) in the barrier layer provides mainly the following advantage. The x%PETI and/or y%PETG copolyester in the middle barrier layer of the preform has substantially the same refractive index (IR1) than the refractive index of MXD6, and because the x%PETI and/or y%PETG copolymer exhibits a lower crystallization speed, the crystallinity of said copolymer in the middle layer of the bottle (after stretching) is still low, and said refractive index (IR1) is not essentially modified when the preform is being stretched; in the end in the bottle, the refractive index (IR2) of the oriented MXD6 and the refractive index (IR1) of the x%PETI copolymer or y%PETG are "substantially the same". The wall of the bottle is thus transparent and exhibits low haze.

Within the scope of the invention the terms "substantially equal" for the two refractive indices (IR1) and (IR2) means that the difference between (IR1) and (IR2) is sufficiently small for avoiding the formation of eye-visible haze in the bottle during stretching. The range for this difference depends notably on the thickness of the layer; the thicker the barrier layer is, the smaller the difference has to be, in order to avoid the eye-visible haze formation. As an example, for a barrier layer having a thickness of 40$\mu$m, it is preferable that the difference between refractive indices (IR1) and (IR2) is less than 0.04, and preferably less than 0.02, in order to avoid haze formation.

Instead of a x%PETI copolymer and y%PETG copolymer (x,y >5), one can also use in the gas barrier layer a blend: homo-or copolymer PET and x%PETI and y%PETG.

The gas barrier layer in examples N°1 to 15 is an active barrier that exhibits high oxygen-scavenging properties. For obtaining such an active barrier, in the gas barrier material (B), one skilled in the art may knowingly substitute cobalt stearate by other transition metal catalyst in a sufficient amount in order that MXD6 scavenges oxygen, and in particular metal salt such as cobalt octoate, rhodium compound, copper compound, or iron compound.

Within the scope of the invention, the outside and inside layers ($L_{OUT}$ and $L_{IN}$) are not necessarily made of PET and could be made of any thermoplastic material that give the required mechanical properties to the bottles, although the use of homo or copolymer PET is preferred for cost reasons.

**Claims**

1. Multilayered preform (1) or multilayered container (1') obtained by biaxially stretching a preform, said multilayered preform or container comprising at least one gas-barrier layer ($L_B$), said gas-barrier layer ($L_B$) comprising a polyamide and a polyester, wherein the polyester comprises a y%PETG copolymer, with y being at least equal to 5, and wherein the amount of polyamide in the barrier layer ($L_B$) is at least 10wt%.

2. Preform or container of claim 1 wherein the polyester comprises a x%PETI copolymer, with x being at least equal to 5.

3. Preform or container of claim 1 or 2 wherein the polyester comprises a x%PETI copolymer and a y%PETG copolymer, with x and y being at least equal to 5.

4. Preform or container of claim 3 wherein x is at least equal to 5, and preferably at least equal to 8 and y is at least equal to 20 and preferably at least equal to 30.

5. Preform or container according to claim 3 or 4 wherein the amount of y%PETG in the barrier layer is greater than the amount of x%PETI.

6. Preform or container according to any one of claims 1 to 5 wherein the polyester is made of a y%PETG copolymer.

7. Preform or container according to any one of claims 1 to 5 wherein the polyester is made of a x%PETI copolymer and of a y%PETG copolymer.

8. Preform or container according to any one of claims 1 to 7 wherein the gas-barrier layer ($L_B$) is made from a blend comprising a polyamide and a y%PETG copolymer.

9. Preform or container according to claim 8 wherein said blend also comprises a x%PETI copolymer.

10. Preform or container according to any one of claims 1 to 9 wherein the gas-barrier layer ($L_B$) comprises not more than 80wt% of y%PETG, and optionally not more than 80wt% of x%PETI, the amount y%PETG and optionally of x%PETI being at least equal to 80wt%.

11. Preform or container according to any one of claims 1 to 10, wherein the polyamide is a xylylene group containing polyamide.

12. Preform or container according to claim 11 wherein the polyamide is MXD6.

13. Preform or container according to any one of claims 1 to 12 wherein the amount of y%PETG copolymer in the barrier layer ($L_B$) is at least 10wt%, preferably at least 50wt%, and more preferably at least 80wt%.

14. Preform or container according to claim 13 wherein the amount of x%PETI copolymer in the barrier layer ($L_B$) is at least 10wt%, preferably at least 50wt%, and more preferably at least 80wt%.

15. Preform or container according to any one of claims 1 to 14 wherein y is at least equal to 20, and preferably at least equal to 30.

16. Preform or container according to claims 15 wherein x is at least equal to 20, and preferably at least equal to 30.

17. Preform or container according to any one of claims 1 to 16 wherein the gas barrier layer ($L_B$) exhibits oxygen-scavenging properties.

18. Preform or container according to claim 17 wherein the gas barrier layer ($L_B$) comprises a transition metal catalyst.

19. Preform or container according to claim 18 wherein the transition metal catalyst is selected from the group: cobalt compound, rhodium compound, copper compound, iron compound.

20. Preform or container according to claim 19 wherein the transition metal catalyst is a cobalt salt.

21. Preform or container according to claim 20 wherein the cobalt salt is cobalt stearate.

22. Preform or container according to any one of claims 1 to 21 and comprising at least three layers: the said gas-barrier layer ($L_B$) sandwiched between two non-barrier layers ($L_{in}$, $L_{out}$).

23. Preform or container according to claim 22 wherein the two non-barrier layers ($L_{in}$, $L_{out}$) are made from homo- or copolymer of PET.

24. Container according to any one of claims 1 to 23 having a haze level less than 5%, preferably less then 3% and more preferably less than 2%.

25. Process of making a container having gas-barrier properties **characterized in that** a multilayered preform according to any one of claims 1 to 23 is biaxially stretched in a mould.

26. Process according to claim 25 wherein the preform is being biaxially stretched with a longitudinal stretch ratio ($SR_L$) greater than 2.5, and/or with a hoop stretch ratio ($SR_H$) greater than 3, and/or with a planar stretch ratio (SR) greater than 10.

**Patentansprüche**

1. Mehrlagige Vorform (1) oder mehrlagiger Behälter (1'), erhalten durch biaxiales Strecken einer Vorform, wobei die Vorform oder der Behälter zumindest eine Gasbarriereschicht ($L_B$) umfasst, wobei die Gasbarriereschicht ($L_B$) zumindest ein Polyamid und ein Polyester umfasst, wobei der Polyester ein y%PETG Copolymer umfasst, wobei y zumindest gleich 5 ist, und wobei der Anteil von Polyamid in der Barriereschicht ($L_B$) zumindest 10 Gew.-% beträgt.

2. Vorform oder Behälter nach Anspruch 1, wobei der Polyester ein x%PETI Copolymer umfasst, wobei x zumindest gleich 5 ist.

3. Vorform oder Behälter nach Anspruch 1 oder 2, wobei der Polyester ein x%PETI Copolymer und ein y%PETG Copolymer umfasst, wobei x und y zumindest gleich 5 ist/sind.

4. Vorform oder Behälter nach Anspruch 3, wobei x zumindest gleich 5 ist und bevorzugt zumindest gleich 8 ist, und y zumindest gleich 20 ist und bevorzugt zumindest gleich 30 ist.

5. Vorform oder Behälter nach Anspruch 3 oder 4, wobei der Anteil von y%PETG in der Barriereschicht größer ist als der Anteil von x%PETI.

6. Vorform oder Behälter nach einem der Ansprüche 1 bis 5, wobei der Polyester aus einem y%PETG Copolymer besteht.

7. Vorform oder Behälter nach einem der Ansprüche 1 bis 5, wobei der Polyester aus einem x%PETI Copolymer und aus einem y%PETG Copolymer besteht.

8. Vorform oder Behälter nach einem der Ansprüche 1 bis 7, wobei die Gasbarriereschicht ($L_B$) aus einer Mischung (Blend) hergestellt wurde, die ein Polyamid und ein y%PETG Copolymer umfasst.

9. Vorform oder Behälter nach Anspruch 8, wobei die Mischung zusätzlich ein x%PETI Copolymer umfasst.

10. Vorform oder Behälter nach einem der Ansprüche 1 bis 9, wobei die Gasbarriereschicht ($L_B$) nicht mehr als 80 Gew.-% y%PETG, und optional nicht mehr als 80 Gew.-% x%PETI, umfasst, der Anteil an y%PETG und optional an x%PETI zumindest gleich 80 Gew.-% ist.

11. Vorform oder Behälter nach einem der Ansprüche 1 bis 10, wobei das Polyamid ein eine Xylylengruppe enthaltendes Polyamid ist.

12. Vorform oder Behälter nach Anspruch 11, wobei das Polyamid MXD6 ist.

13. Vorform oder Behälter nach einem der Ansprüche 1 bis 12, wobei der Anteil an y%PETG Copolymer in der Barriereschicht ($L_B$) zumindest 10 Gew.-%, bevorzugt zumindest 50 Gew.-% und besonders bevorzugt zumindest 80 Gew.-% beträgt.

14. Vorform oder Behälter nach Anspruch 13, wobei der Anteil an x%PETI Copolymer in der Barriereschicht ($L_B$) zumindest 10 Gew.-%, bevorzugt zumindest 50 Gew.-% und besonders bevorzugt zumindest 80 Gew.-% beträgt.

15. Vorform oder Behälter nach einem der Ansprüche 1 bis 14, wobei y zumindest gleich 20 und bevorzugt zumindest gleich 30 ist.

16. Vorform oder Behälter nach Anspruch 15, wobei x zumindest gleich 20 und bevorzugt zumindest gleich 30 ist.

**17.** Vorform oder Behälter nach einem der Ansprüche 1 bis 16, wobei die Gasbarriereschicht ($L_B$) sauerstoffzehrende Eigenschaften aufweist.

**18.** Vorform oder Behälter nach Anspruch 17, wobei die Gasbarriereschicht ($L_B$) einen Übergangsmetallkatalysator umfasst.

**19.** Vorform oder Behälter nach Anspruch 18, wobei der Übergangsmetallkatalysator ausgewählt ist aus der Gruppe bestehend aus: Kobaltverbindung, Rhodiumverbindung, Kupferverbindung, Eisenverbindung.

**20.** Vorform oder Behälter nach Anspruch 19, wobei der Übergangsmetallkatalysator ein Kobaltsalz ist.

**21.** Vorform oder Behälter nach Anspruch 20, wobei das Kobaltsalz Kobaltstearat ist.

**22.** Vorform oder Behälter nach einem der Ansprüche 1 bis 21 und mit zumindest drei Schichten: die Gasbarriereschicht ($L_B$), angeordnet zwischen zwei Nicht-Barriereschichten ($L_{in}$, $L_{out}$).

**23.** Vorform oder Behälter nach Anspruch 22, wobei die zwei Nicht-Barriereschichten ($L_{in}$, $L_{out}$) aus einem PET-Homopolymer oder PET-Copolymer hergestellt wurden.

**24.** Behälter nach einem der Ansprüche 1 bis 23 mit einem Trübungsgrad von kleiner als 5 %, bevorzugt kleiner als 3 % und besonders bevorzugt kleiner als 2%.

**25.** **Verfahren** zum Herstellen eines Behälters mit Gasbarriereeigenschaften, **dadurch gekennzeichnet, dass** eine mehrlagige Vorform nach einem der Ansprüche 1 bis 23 biaxial in einer Form gestreckt wird.

**26.** Verfahren nach Anspruch 25, wobei die Vorform biaxial gestreckt wird mit einem longitudinalen Streckverhältnis ($SR_L$) größer als 2,5 und/oder mit einem umfänglichen Streckverhältnis ($SR_H$) größer als 3 und/oder mit einem planaren Streckverhältnis (SR) größer als 10.

**Revendications**

**1.** Préforme multicouche (1) ou récipient multicouche (1') obtenu(e) par extension biaxiale d'une préforme, ladite préforme ou ledit récipient multicouche comprenant au moins une couche barrière au gaz ($L_B$), ladite couche barrière au gaz ($L_B$) comprenant un polyamide et un polyester, dans laquelle le polyester comprend un copolymère PETG à y %, où y est au moins égal à 5, et dans laquelle la quantité de polyamide dans la couche barrière ($L_B$) est d'au moins 10 % en poids.

**2.** Préforme ou récipient selon la revendication 1, dans laquelle/lequel le polyester comprend un copolymère PETI à x %, où x est au moins égal à 5.

**3.** Préforme ou récipient selon la revendication 1 ou 2, dans laquelle/lequel le polyester comprend un copolymère PETI à x % et un copolymère PETG à y %, où x et y sont au moins égaux à 5.

**4.** Préforme ou récipient selon la revendication 3, dans laquelle/lequel x est au moins égal à 5, et de préférence au moins égal à 8, et y est au moins égal à 20 et de préférence au moins égal à 30.

**5.** Préforme ou récipient selon la revendication 3 ou 4, dans laquelle/lequel la quantité de PETG à y % dans la couche barrière est supérieure à la quantité de PETI à x %.

**6.** Préforme ou récipient selon l'une quelconque des revendications 1 à 5, dans laquelle/lequel le polyester est constitué d'un copolymère PETG à y %.

**7.** Préforme ou récipient selon l'une quelconque des revendications 1 à 5, dans laquelle/lequel le polyester est constitué d'un copolymère PETI à x % et d'un copolymère PETG à y %.

**8.** Préforme ou récipient selon l'une quelconque des revendications 1 à 7, dans laquelle/lequel la couche barrière au gaz ($L_B$) est constituée d'un mélange contenant un polyamide et un copolymère PETG à y %.

**9.** Préforme ou récipient selon la revendication 8, dans laquelle/lequel ledit mélange contient également un copolymère PETI à x %.

**10.** Préforme ou récipient selon l'une quelconque des revendications 1 à 9, dans laquelle/lequel la couche barrière au gaz ($L_B$) ne comprend pas plus de 80 % en poids de PETG à y %, et optionnellement pas plus de 80 % en poids de PETI à x %, la quantité de PETG à y % et optionnellement de PETI à x % étant au moins égales à 80 % en poids.

**11.** Préforme ou récipient selon l'une quelconque des revendications 1 à 10, dans laquelle/lequel le polyamide est un polyamide contenant un groupe xylylène.

**12.** Préforme ou récipient selon la revendication 11, dans laquelle/lequel le polyamide est le MXD6.

**13.** Préforme ou récipient selon l'une quelconque des revendications 1 à 12, dans laquelle/lequel la quantité de copolymère PETG à y % dans la couche barrière ($L_B$) est d'au moins 10 % en poids, de préférence d'au moins 50 % en poids, et mieux encore d'au moins 80 % en poids.

**14.** Préforme ou récipient selon la revendication 13, dans laquelle/lequel la quantité de copolymère PETI à x % dans la couche barrière ($L_B$) est d'au moins 10 % en poids, de préférence d'au moins 50 % en poids, et mieux encore d'au moins 80 % en poids.

**15.** Préforme ou récipient selon l'une quelconque des revendications 1 à 14, dans laquelle/lequel y est au moins égal à 20, et de préférence au moins égal à 30.

**16.** Préforme ou récipient selon la revendication 15, dans laquelle/lequel x est au moins égal à 20, et de préférence au moins égal à 30.

**17.** Préforme ou récipient selon l'une quelconque des revendications 1 à 16, dans laquelle/lequel la couche barrière au gaz ($L_B$) possède des propriétés de récupération d'oxygène.

**18.** Préforme ou récipient selon la revendication 17, dans laquelle/lequel la couche barrière au gaz ($L_B$) comprend un catalyseur à base de métaux de transition.

**19.** Préforme ou récipient selon la revendication 18, dans laquelle/lequel le catalyseur à base de métaux de transition est sélectionné dans le groupe comprenant un composé de cobalt, un composé de rhodium, un composé de cuivre et un composé de fer.

**20.** Préforme ou récipient selon la revendication 19, dans laquelle/lequel le catalyseur à base de métaux de transition est un sel de cobalt.

**21.** Préforme ou récipient selon la revendication 20, dans laquelle/lequel le sel de cobalt est le stéarate de cobalt.

**22.** Préforme ou récipient selon l'une quelconque des revendications 1 à 21 et comprenant au moins trois couches: ladite couche barrière au gaz ($L_B$) coincée entre deux couches perméables ($L_{IN}$, $L_{OUT}$).

**23.** Préforme ou récipient selon la revendication 22, dans laquelle/lequel les deux couches perméables ($L_{IN}$, $L_{OUT}$) sont constituées d'un homopolymère ou d'un copolymère de PET.

**24.** Récipient selon l'une quelconque des revendications 1 à 23, présentant un niveau de trouble inférieur à 5 %, de préférence inférieur à 3 %, et mieux encore inférieur à 2 %.

**25.** Procédé de fabrication d'un récipient possédant des propriétés de barrière au gaz, **caractérisé en ce qu'**une préforme multicouche selon l'une quelconque des revendications 1 à 23 subit une extension biaxiale dans un moule.

**26.** Procédé selon la revendication 25, dans lequel la préforme subit une extension biaxiale avec un rapport d'extension longitudinale ($SR_L$) supérieur à 2,5, et/ou avec un rapport d'extension circonférentielle ($SR_H$) supérieur à 3, et/ou avec un rapport d'extension planaire (SR) supérieur à 10.

FIG.1

FIG.2

FIG.3

**EP 1 651 526 B1**

## REFERENCES CITED IN THE DESCRIPTION

**Patent documents cited in the description**

- US 4501781 A
- EP 0301719 A
- EP 0507207 A
- US 5281 A
- US 260 A
- US 5281260 A
- US 6239210 B